# EUROPEAN PATENT APPLICATION

(11) **EP 4 183 830 A1**
(43) Date of publication of application: **24.05.2023**
(21) Application number: 22203069.4
(22) Date of filing: 21.10.2022
(51) Int. Cl.: C08L 23/10, C08L 1/02, C08L 51/06, C08K 5/20, C08K 5/134, C08K 5/526, C08K 7/20, C08K 7/28

(54) **NATURAL FIBER REINFORCEMENT MATERIAL AND PREPARATION METHOD THEREFOR**

(30) Priority: 23.11.2021 CN 202111392904
(71) Applicant: Faurecia (China) Holding Co., Ltd., Shanghai 201109 (CN)
(72) Inventor: RUAN, Xinyi, SHANGHAI, 201109 (CN); ZHANG, Shengguo, SHANGHAI, 201109 (CN)
(74) Representative: Plasseraud IP

(57) **Abstract**

The present disclosure relates to natural fiber reinforcement material, parts by weight of constituent raw materials of the natural fiber reinforcement material are: polypropylene: 60-85, natural fiber: 5-30 parts, a compatibilizer: 0.05-8 parts, glass beads: 0-5 parts, a lubricating dispersant: 0.2-2.0 parts, and at least one antioxidant: 0.1-0.6 part. The present disclosure further relates to a method for preparing the above natural fiber reinforcement material. The constituent raw materials of the natural fiber reinforcement material of the present disclosure are simple and easy to obtain, the cost of the preparation method is low, and the prepared material has a beautiful appearance, is suitable for the visible interiors in automobiles and also has excellent physical properties and less weight.

## Description

### TECHNICAL FIELD

The present disclosure relates to field of polymers, in particular to natural fiber reinforcement material and a preparation method therefor.

### BACKGROUND

With the rapid development of the automotive industry, the overall quality of automotive components is also improving, and composite materials have gradually replaced steel materials in the application of the automotive components. Due to a large number of advantages such as easy forming, easy processing and high toughness, carbon fiber or glass fiber reinforced composite materials are mostly used in the market. However, with the attention paid to the environment and energy, people gradually realize that this kind of composite material will cause increasingly serious damage to the ecology. Every year, the wastes of man-made fiber reinforcement materials in China are more than one million tons. It is difficult to recycle these wastes, which can merely be treated by burning and landfill. A large number of waste materials will have a huge impact on the environment. As a result, people tend to use greener and more environment-friendly composite materials. Therefore, composite materials made of natural fiber have become the current development hotspot.

Natural fiber reinforcement materials have many outstanding advantages: unique mechanical properties, good thermal properties, low density, excellent processability, non-toxicity, environmental protection, easy obtaining of raw materials, etc. With further research, some properties of natural fiber reinforcement materials can be improved by using specific constituent raw materials with specific parts by weight. For example, it is known that in the related art, a certain amount of raw materials such as a flame retardant can be added to make the composite materials have excellent flame retardant effects; Nano-TiO₂ may also be introduced to improve the odor of the natural fiber; or the mechanical strength of the composite materials can be enhanced by modifiers, initiators and hard natural fiber.

However, the vast majority of the natural fiber reinforcement materials are used in invisible components in automobiles, so there is no great requirement for appearance. However, when the natural fiber reinforcement materials are used in visible automobile interiors, their beauty becomes an important consideration. In the related art, by adding skin touch modifiers and glass beads, the natural fiber reinforcement materials have low glossiness and good touch, but physical properties thereof are not satisfactory.

### SUMMARY

It is worth nothing that the object of the present disclosure is to overcome one or more shortcomings that have been found in the background technology, namely, to provide natural fiber reinforcement material suitable for the visible interiors in automobiles, which has excellent aesthetics, excellent physical properties and less weight.

For this object, a first aspect of the present disclosure provides natural fiber reinforcement material, and parts by weight of constituent raw materials of the natural fiber reinforcement material are:
60-85 parts of polypropylene;
5-30 parts of natural fiber;
0.05-8 parts of a compatibilizer;
0-5 parts of glass beads;
0.2-2.0 parts of a lubricating dispersant (TAF); and
0.1-0.6 part of at least one antioxidant.

According to the present disclosure, the physical and chemical compatibility between the polypropylene and the natural fiber is increased by adding the compatibilizer; surface defects of the natural fiber reinforcement materials are eliminated through the action of the glass beads and the lubricating dispersant, a defective rate is reduced, and the surface glossiness and smoothness are improved; and color resistance of the natural fiber reinforcement material under processing conditions is improved by adopting the antioxidant, and finally finished products with beautiful appearance, low density and excellent physical properties are prepared.

Preferably, the at least one antioxidant includes an antioxidant 1010, and part by weight of the antioxidant 1010 is 0.1-0.5 part.

Preferably, the at least one antioxidant includes an antioxidant 168, and part by weight of the antioxidant 168 is 0.2-0.6 part.

In addition, the antioxidants 1010 and 168 may be simultaneously added to improve the ornamental and physical properties of the finished products through synergistic effects of the two.

Preferably, the polypropylene is one or a mixture of homo-polypropylene and co-polypropylene, and a melt flow rate of the polypropylene is 10-25 g/10 min.

Preferably, the natural fiber is pulp fiber or cellulose fiber.

The cellulose fiber is viscose fiber, acetate fiber, Lyocell fiber, modal fiber, bamboo fiber or copper ammonia fiber.

Preferably, the compatibilizer is polypropylene grafted with maleic anhydride (PP-g-MAH) or polypropylene grafted with polystyrene (PP-g-PS).

Optionally, the compatibilizer includes a coupling agent, and the coupling agent is a silane coupling agent, a titanate coupling agent, a zirconium coupling agent, a magnesium coupling agent or a tin coupling agent.

A second aspect of the present disclosure provides a method for preparing the above natural fiber reinforcement material, and the method includes the following steps:
(1) fully mixing polypropylene, a compatibilizer, a lubricating dispersant and at least one antioxidant uniformly according to the above parts by weight; and
(2) adding the fully mixed materials into an extruder, then adding natural fiber and glass beads at a side feeding port of the extruder for melting and mixing, and then extruding and granulating through the extruder to prepare the natural fiber reinforcement material.

Preferably, the extruder is a twin-screw extruder, and an aspect ratio of the twin-screw extruder is 35-40.

Preferably, a melt granulation temperature of the extruder is 160-230 degrees Celsius.

### DETAILED EMBODIMENT

The present disclosure is described in detail below with reference to the embodiments.

The present disclosure provides natural fiber reinforcement material, and parts by weight of constituent raw materials of the natural fiber reinforcement material are:
60-85 parts of polypropylene;
5-30 parts of natural fiber;
0.05-8 parts of a compatibilizer;
0-5 parts of glass beads;
0.2-2.0 parts of a lubricating dispersant; and
0.1-0.6 part of at least one antioxidant.

The polypropylene is one or a mixture of homo-polypropylene and co-polypropylene, and a melt flow rate of the polypropylene is 10-25 g/10 min.

Preferably, the natural fiber is pulp fiber or cellulose fiber, and the cellulose fiber is viscose fiber, acetate fiber, Lyocell fiber, modal fiber, bamboo fiber or copper ammonia fiber.

The addition of the compatibilizer can enable the raw materials such as the polypropylene and the natural fiber to improve the adhesion of a phase interface layer, promote phase dispersion, and stabilize the morphological structure through mixing. With the help of a bonding force between polymer molecules, the interface tension between two phase components can be reduced, the uniformity of a blend system is increased, phase separation is reduced, and the comprehensive performance of polymer blends is improved.

Preferably, the compatibilizer is polypropylene grafted with maleic anhydride or polypropylene grafted with polystyrene.

Specifically, the polypropylene grafted with maleic anhydride may become bridge to improve the adhesion and compatibility between polar materials and non-polar materials, and can greatly improve the affinity between the natural fiber and the polypropylene as well as the dispersibility of the natural fiber, thus effectively enhancing the dispersion of the natural fiber in polypropylene, so as to improve the tensile strength and impact strength of the natural fiber reinforcement material.

Optionally, the compatibilizer includes a coupling agent. The coupling agent is a silane coupling agent, a titanate coupling agent, a zirconium coupling agent, a magnesium coupling agent or a tin coupling agent. The viscosity of materials can be reduced during processing, and similarly, a dispersity of the natural fiber can be improved to improve various physical properties, such as good surface quality and mechanical, thermal and electrical properties.

Optionally, the glass beads are hollow glass beads. The glass beads have low thermal conductivity, high compressive strength, good dispersibility and fluidity, and high chemical stability.

The lubricating dispersant can increase an extrusion speed, improve the processing fluidity, reduce a screw torque, and significantly improve the dispersibility of the natural fiber in the extrusion process, thus improving the mechanical properties of the materials; the surface defects of the materials can further be eliminated, the surface glossiness and smoothness of the materials are improved, and the defective rate is reduced; and in addition, the lubricating dispersant has good compatibility with the polypropylene, no gradual migration trend, and good stability.

Preferably, the at least one antioxidant includes an antioxidant 1010, and part by weight of the antioxidant 1010 is 0.1-0.5 part.

The antioxidant 1010, namely, pentaerythritol tetrakis [β-(3,5-di-tert-butyl-4-hydroxyphenyl) propionic], has excellent oxidation resistance to the polypropylene, can effectively prevent the thermal oxidative degradation of the natural fiber reinforcement material in a long-term aging process, and is also an efficient processing stabilizer, which can improve the color resistance of the materials, and prevent the color change caused by light and heat.

In addition, the at least one antioxidant may further be selected as an antioxidant 168, and part by weight of the antioxidant 168 is 0.2-0.6 part.

The antioxidant 168, namely, a phosphite antioxidant, has excellent performance, no pollution, good volatility resistance and stable hydrolysis, and can significantly improve the light stability of the materials, and the antioxidant 168 and the antioxidant 1010 have a good synergistic effect.

A method for preparing the above natural fiber reinforcement material specifically includes the following steps:
(1) Polypropylene, a compatibilizer, a lubricating dispersant and at least one antioxidant are fully mixed uniformly according to the specific parts by weight.
(2) The fully mixed materials are added into an extruder, then natural fiber and glass beads are added at a side feeding port of the extruder for melting and mixing, and then the melted and mixed materials are extruded and granulated through the extruder to prepare the natural fiber reinforcement material.

Preferably, a twin-screw extruder is adopted to prepare the natural fiber reinforcement material, the aspect ratio of the twin-screw extruder is 35-40, and the melt granulation temperature of the extruder is 160-230 degrees Celsius.

The embodiments of the present disclosure will be described in detail below.

As shown in Table 1, the proportion of parts by weight of the constituent raw materials of a variety of natural fiber reinforcement materials is configured.

Specifically, in embodiment 1, 70 parts of polypropylene, 20 parts of pulp fiber, 10 parts of a compatibilizer, glass beads, a lubricating dispersant and antioxidants 1010 and 168 are weighed.

In embodiment 2, 60 parts of the polypropylene, 30 parts of the pulp fiber, 9.5 parts of the compatibilizer, the glass beads, the lubricating dispersant and 0.5 part of the antioxidant 1010 are weighed.

In embodiment 3, 65 parts of the polypropylene, 25 parts of the pulp fiber, 9.5 parts of the compatibilizer, the glass beads, the lubricating dispersant and 0.5 part of the antioxidant 168 are weighed.

**Table 1: Parts by weight of the constituent raw materials of the natural fiber reinforcement materials**

| | Embodiment 1 | Embodiment 2 | Embodiment 3 |
|---|---|---|---|
| Polypropylene | 70 | 60 | 65 |
| Natural fiber | 20 | 30 | 25 |
| Compatibilizer | 10 | 9.5 | 9.5 |
| Glass beads | | | |
| Lubricating dispersant | | | |
| Antioxidant 1010 | | 0.5 | Non |
| Antioxidant 168 | | Non | 0.5 |

After weighing the corresponding parts by weight of each constituent raw material, the natural fiber reinforcement material is prepared by the above preparation method according to the weighed parts by weight. The natural fiber reinforcement materials prepared in different embodiments are tested according to the relevant testing standards. The tested main physical properties are as follows: density, melt flow index, tensile strength, tensile modulus, bending modulus, Charpy unnotched impact strength, Charpy notched impact strength, and heat deformation temperature, and the detection standard and detection result about each embodiment are as shown in Table 2:

**Table 2: Main physical performance indexes of the natural fiber reinforcement materials**

| Physical properties | Detection standard | Unit | Embodiment 1 | Embodiment 2 | Embodiment 3 |
|---|---|---|---|---|---|
| Density | ISO 1183 | g/cm³ | 0.98 | 0.97 | 0.97 |
| Melt flow index (230°/2, 16 kg) | ISO 1133 | g/10 min | 14 | 13.5 | 14 |
| Tensile strength | ISO 527 | Mpa | 40 | 39 | 38 |
| Tensile modulus | ISO 527 | Mpa | 2400 | 2300 | 2300 |
| Bending modulus | ISO 178 | Mpa | 2200 | 2220 | 2100 |
| Charpy unnotched impact strength (23°C) | ISO 179 | Kj/m² | 35 | 34 | 37 |
| Charpy notched impact strength (23°C) | ISO 179 | Kj/m² | 5.5 | 5.3 | 5.6 |
| Charpy notched impact strength (-30°C) | ISO 179/1eA | Kj/m² | 4 | 4 | 4 |
| Heat deformation temperature (1.80 Mpa) | ISO 75/A | °C | 75 | 75 | 75 |
| Heat deformation temperature (0.45 Mpa) | ISO 75/A | °C | 130 | 125 | 127 |

It can be seen from Table 2 that the natural fiber reinforcement materials prepared by mixing the above constituent raw materials according to different parts by weight have excellent physical properties. In different embodiments, the density of the natural fiber reinforcement material does not exceed 0.98 g/cm³. According to the tensile strength/modulus, bending modulus, Charpy unnotched impact strength and Charpy notched impact strength at a certain temperature and the heat deformation temperature at a certain pressure, it can be seen that whether merely the antioxidant 1010 or merely the antioxidant 168 is used in the constituent raw materials, or both the antioxidants 1010 and 168 are simultaneously used, the final products will have a good appearance, and the mechanical properties are improved while the density and weight are reduced. In addition, since the constituent raw materials are easy to obtain, the cost of preparing the above natural fiber reinforcement materials is also low.

The embodiments above are merely used as examples, and are not intended to limit the present disclosure. On this basis, one skilled in the art can anticipate other embodiments that can achieve the same functions within the protection scope of the claims of the present disclosure.

One skilled in the art is familiar with various embodiments as well as various modifications and improvements. In particular, it should be clear that, except obviously contradictory cases or incompatible cases, all the foregoing features, and/or specific embodiments of the present disclosure may be combined with each other. All these embodiments and improvements fall within the protection scope of the present disclosure.

## Claims

1. Natural fiber reinforcement material, wherein parts by weight of constituent raw materials of the natural fiber reinforcement material are:
polypropylene: 60-85 parts;
natural fiber: 5-30 parts;
a compatibilizer: 0.05-8 parts;
glass beads: 0-5 parts;
a lubricating dispersant: 0.2-2.0 parts; and
at least one antioxidant: 0.1-0.6 part.

2. The natural fiber reinforcement material according to claim 1, wherein the at least one antioxidant comprises an antioxidant 1010, and part by weight of the antioxidant 1010 is 0.1-0.5 part.

3. The natural fiber reinforcement material according to claim 1 or 2, wherein the at least one antioxidant comprises an antioxidant 168, and part by weight of the antioxidant 168 is 0.2-0.6 part.

4. The natural fiber reinforcement material according to claim 1, wherein the polypropylene is one or a mixture of homo-polypropylene and co-polypropylene, and a melt flow rate of the polypropylene is 10-25 g/10 min.

5. The natural fiber reinforcement material according to claim 1, wherein the natural fiber is pulp fiber or cellulose fiber.

6. The natural fiber reinforcement material according to claim 5, wherein the cellulose fiber is viscose fiber, acetate fiber, Lyocell fiber, modal fiber, bamboo fiber or copper ammonia fiber.

7. The natural fiber reinforcement material according to claim 1, wherein the compatibilizer is polypropylene grafted with maleic anhydride or polypropylene grafted with polystyrene.

8. The natural fiber reinforcement material according to claim 1, wherein the compatibilizer comprises a coupling agent, and the coupling agent is a silane coupling agent, a titanate coupling agent, a zirconium coupling agent, a magnesium coupling agent or a tin coupling agent.

9. A preparation method for preparing the natural fiber reinforcement material according to claim 1, comprising the following operations:
(1) fully mixing polypropylene, a compatibilizer, a lubricating dispersant and at least one antioxidant uniformly based on parts by weight according to claim 1; and
(2) adding the fully mixed materials into an extruder, then adding natural fiber and glass beads at a side feeding port of the extruder for melting and mixing, and finally extruding and granulating through the extruder to prepare the natural fiber reinforcement material.

10. The preparation method according to claim 9, wherein the extruder is a twin-screw extruder, and an aspect ratio of the twin-screw extruder is 35-40.

11. The preparation method according to claim 9, wherein a melt granulation temperature of the extruder is 160-230 degrees Celsius.
